# EUROPEAN PATENT SPECIFICATION

(11) **EP 0 439 609 B1**
(45) Date of publication and mention of the grant of the patent: **09.07.1997**
(21) Application number: 89911389.8
(22) Date of filing: 16.10.1989
(51) Int. Cl.: G07F 7/10

(54) **SYSTEM FOR COLLATING PERSONAL IDENTIFICATION NUMBER**
KLASSIFIZIERUNGSSYSTEM FÜR PERSÖNLICHE GEHEIMZAHLEN
SYSTEME DE CLASSEMENT DE NUMEROS D'IDENTIFICATION PERSONNELS

(30) Priority: 18.10.1988 JP 260384/88
(43) Date of publication of application: 07.08.1991
(73) Proprietor: Oki Electric Industry Company, Limited, Tokyo 105 (JP)
(72) Inventor: NARITA, Kiyokazu Oki Electric Industry Co., Ltd., Tokyo 105 (JP); TAKIZAWA, Toshio Oki Electric Industry Co., Ltd., Tokyo 105 (JP)
(74) Representative: Betten & Resch
(86) International application number: PCT/JP89/01062
(87) International publication number: WO 90/04832

(56) References cited:
- EP-A- 0 193 920
- WO-A-88/01818
- FR-A- 2 616 937
- JP-A-61 255 491
- JP-A-62 128 386
- JP-A-62 189 593
- JP-A-62 221 052
- JP-A-62 251 946

## Description

### TECHNICAL FIELD

The present invention relates to a secret identification number checking system for securing safe financial transactions using a magnetic card by collating a secret identification number entered by the bearer of the magnetic card with a secret identification number written in the magnetic card.

### BACKGROUND ART

A conventional magnetic card for financial transactions stores a secret identification number, and the magnetic card reader of a transaction machine reads the secret identification number from the magnetic card, a secret identification number entered by the bearer of the magnetic card is collated with the secret identification number written in the magnetic card, and the rightfulness of the bearer of the magnetic card is verified to secure safe transactions. However, such a secret identification number checking system has a disadvantage that the secret identification number written in the magnetic card is liable to be spied out by a mala fide third person because the secret identification number and in the magnetic card can readily be read.

A previously proposed secret identification number checking system stores a code representing a secret identification number in a magnetic card, a magnetic card reader carries out a decoding program to decode the code into the corresponding secret identification number and the secret identification number is verified. However, since storage means (read-only memory) storing the decoding program can readily be taken out from the magnetic card reader, and read means for reading the contents of the storage means is readily available, it is possible that the coding algorithm is analyzed easily and the secret identification number is detected by a person having expert knowledge in the relevant field.

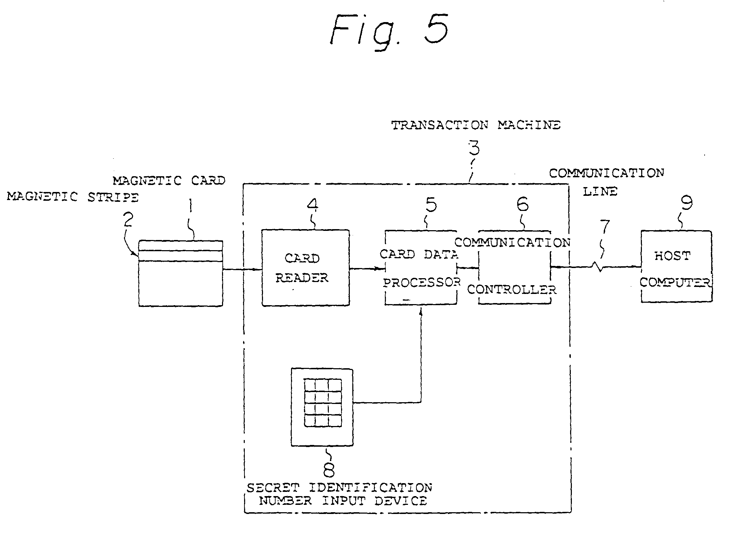

Another previously proposed secret identification number checking method uses a magnetic card not storing any secret identification number, and a host computer installed in a control center to verify the rightfulness of the bearer of the magnetic card. Fig. 5 shows a transaction machine for carrying out such a secret identification number checking method. Referring to Fig. 5, a bank code number, an office code number and an account number assigned to the bearer are recorded in the magnetic stripe 2 of a magnetic card 1. A transaction machine 3 comprises a card reader 4 for reading data recorded in the magnetic stripe 2 of the magnetic card 1, a card data processor 5 for processing the data read by the card reader 4, a communication controller 6 for sending data obtained by processing the data read by the card reader 4 through a communicatoin line to a host computer 9 installed in a control center, and a secret identification input device 8 by which the bearer of the magnetic card enters his secret identification number. The secret identification number of the bearer is stored in a file of the host computer 9 of the control center.

The secret identification number checking operation will be described hereinafter. When the magnetic card 1 is inserted in the transaction machine 3 by the bearer, the card reader 4 reads the data recorded on the magnetic stripe 2 of the magnetic card 1 and sends the same to the card data processor 5. The card data processor selects data necessary for checking the secret identification number, such as the bank code number, the office code number and the account number of the bearer, and sends the same to the communication controller 6. The communication controller sends 6 the data for checking the secret identification number through the communication line 7 to the host computer 9 of the control center. The host computer retrieves the secret identification number of the bearer from the file by using the office code number and the account number as retrieval keys.

On the other hand, the bearer operates the secret identification number input device 8 to enter the secret identification number. Then, the secret identification number is sent through the card data processor 5, the communication controller 6 and the communication line 7 to the host computer 9 of the control center. Then, the host computer 9 collates the secret identification number entered by the bearer with the secret idenfification number retrieved from the file. When these secret identification numbers coincides with each other, the host computer 9 sends a transaction start signal to the transaction machine 3.

However, the secret identification number can easily be eavesdropped by tapping the communication line because this method transmits the secret identification number through the communication line. The use of the communication line increases communication cost and collation needs time. Furthermore, the host computer needs to share its throughput to checking the secret identification number.

EP-A-0 193 920 discloses an IC card system wherein application program data is sent with decryption key code data from an initializing IC card to an application program RAM arranged in an IC card terminal. The terminal is then initialized and customer IC card reception preparation is completed. An administration identification number is entered at a key input section and compared with a prestored administration identification number. Then decryption data and application program data is transferred to the terminal which is then to communicate with the customer ID card. After entering a personal identification number which is prepared with a prestored personal identification number at the customer IC card encrypted customer account data is read out from the customer IC card and decrypted using the decryption data.

WO-A-88/01818 discloses an automated transaction system which employs a user card. The card has a secure, resident microprocessor which executes an interactive handshake recognition procedure with a secure, resident microprocessor in the value dispensing section of the terminal prior to carrying out a requested transaction. The handshake procedure operates by an exchange of encrypted words beween the card microprocessor and the dispensor microprocessor using corresponding encryption algorithms and a secret key number. A personal identification number can be written into the cards memory and requested of the user with each transaction.

Accordingly, it is an object of the present invention to provide a secret identification number checking system capable of enhancing the security of transactions and of avoiding the reduction of the throughput of a host computer by storing information for collating a secret identification number entered by the bearer of a magnetic card with a secret identification number stored in the magnetic card in a code in an external storage means separate from a transaction machine, and by checking the secret identification number by the transaction machine after mutual authentication.

### DISCLOSURE OF THE INVENTION

A secret identification number checking system according to the present invention is disclosed in claim 1. Claims 2 to 5 disclose embodiments of the invention.

A secret identification number checking system comprises: a card medium including ICs storing decoding information for collating a secret identification number entered by the bearer of a magnetic card with an encrypted secret identification number written in the magnetic card, and mutual authentication data for mutual authentication to verify the rightfulness of the second party through mutual authentication by using the mutual authentication data; and encrypting and decoding means for storing the mutual authentication data and for enabling the collation of the secret identification number entered by the bearer with the secret identification number written in the card medium on the basis of the decoding information. The card medium and the encrypting and decoding means authenticate mutually on the basis of the mutual authentication data, and the card medium sends the decoding information to the encrypting and decoding means when both the card medium and the encrypting and decoding means are rightful. This procedure can be achieved without using the host computer of the control center, the secret identification number is safe from spying by tapping the communication line and reduces load on the host computer.

Since the card medium and the encrypting and decoding means authenticate mutually, and the check of the secret identification number is forbidden if both the card medium and the encrypting and decoding means are not rightful, the security of transaction is enhanced.

### BRIEF DESCRIPTION OF THE DRAWINGS

Figure 1 is a block diagram of a secret identification number checking system in a preferred embodiment according to the present invention;
Figure 2 is a view of assistance in explaining an AP card employed in the embodiment of the present invention;
Figure 3 is a flow chart of a procedure to be executed by the embodiment of the present invention;
Figure 4 is a flow chart of a procedure of mutual authentication to be executed by the embodiment of the present invention; and
Figure 5 is a block diagram of a conventional secret identification number checking system.

### DETAILED DESCRIPTION

A secret identification number checking system in a preferred embodiment according to the present invention will be described hereinafter with reference to the accompanying drawings, in which like parts are denoted by the same reference characters throughout the drawings.

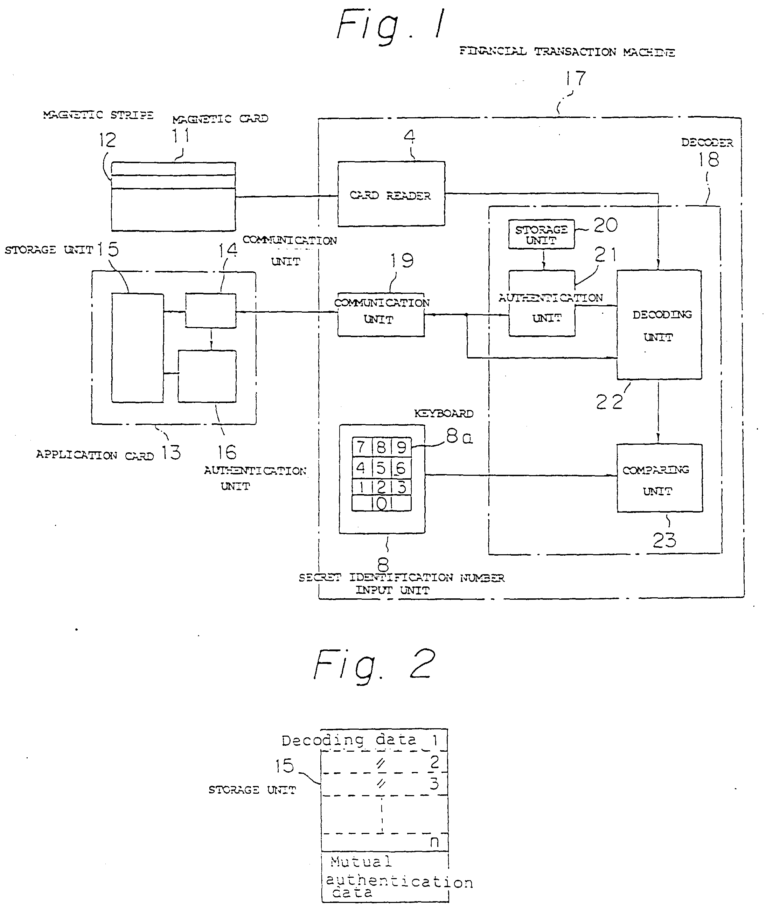

The construction of the secret identification number checking system embodying the present invention will be described with reference to Fig. 1.

A magnetic card 11 is a card having a data storage function for use as a credit card or a cash card for financial transactions. The magnetic card 11 has a magnetic stripe 12 for storing data including cryptographic data F representing a secret identification number N specifying the bearer of the magnetic card 11, discriminating information discriminating the type of the magnetic card 11, for example, a credit card or a cash card, a bank number, an office number and an account number of the bearer. The secret identification number N specifying the bearer is encrypted by known means and is written in the magnetic stripe 12 in issuing the magnetic card 11.

The secret identification number checking system in this embodiment uses an application card (hereinafter referred to as "AP card") 13 as a card medium. The AP card 13 is an IC card in common parlance having an IC chip comprising a microcomputer, memories and the peripheral circuits, having data storage and data processing functions embedded therein. The AP card 13 has a communication unit 14, a storage unit 15 and an authentication unit 16. Data are transmitted between the AP card 13 and a transaction machine, which will be described afterward, through the communication unit 14. As shown in Fig. 2, the storage unit 15 stores a plurality of decoding datasets for decoding different cryptographic data F stored in the magnetic stripes 12 of magnetic cards 11 of different types, respectively. Shown in Fig. 2 are the contents of the memory unit 15 of the AP card 13. Each decoding dataset comprises a decoding algorithm f and a decoding key k. The decoding algorithm f and the decoding key k are information to enable decoding of the cryptographic code of the secret identification number into the secret identification number and collating a secret identification number entered by the bearer with the decoded secret identification number. As shown in Fig. 2, mutual authentication data for the mutual authentication between a decoder, which will be described afterward, and the AP card 13 is stored in the storage unit 15 of the AP card 13. The mutual authentication data comprises key information KID₂, random numbers N₂ and an algorithm f₂. The authentication unit 16 determines if the transaction machine is rightful on the basis of the mutual authentication data stored in the storage unit 15 and mutual authentication data stored in the transaction machine.

A financial transaction machine 17 comprises a card reader 4 for reading the information written in the magnetic stripe 12 of the magnetic card 11, a decoder 18 for decoding the cryptographic data and checking the secret identification number by comparison and collation, a communication unit 19 through which data are transmitted between the AP card 13 and the decoder 18, and a secret identification number input unit 8 to be operated by the bearer to enter a secret identification number.

The card reader 4 reads magnetic data written in the magnetic stripe 12 of the magnetic card 11 including the cryptographic data F representing a secret identification number, the card discriminating number discriminating the type of the magnetic card 11 and the account number, converts the magnetic data into corresponding electric signals, and sends the electric signals to the decoder 18.

The decoder 18 comprises a storage unit 20, an authentication unit 21, a decoding unit 22 and a comparing unit 23. The storage unit 20 stores mutual authentication data for the mutual authentication between the AP card and the decoder 18 including key data KID₁, random numbers N₁ and an algorithm f₁. The authentication unit 21 executes mutual authentication on the basis of the mutual authentication data stored in the storage unit 20 and the mutual authentication data stored in the storage unit 15 of the AP card 13 to check the rightfulness of the AP card 13. The decoding unit 22 receives the cryptographic secret identification number read by the card reader 4, and decoding information from the AP card 13 according to the decision made by the authentication unit 21, and decodes cryptographic secret identification number by using the decoding data. The comparing unit 23 collates the decoded secret identification number decoded by the decoding unit 22 with secret identification number entered by operating the secret identification number input unit 8.

The communication unit 19 reads the data stored in the storage unit 15 of the AP card 13, sends the same to the decoder 18, and sends data provided by the decoder 18 to the AP card 13.

The secret identification number input unit 8 has a keyboard 8a. The bearer operates the keyboard 8a to enter a secret identification number. The secret identification number entered by operating the keyboard 8a is converted into a corresponding electric signal, which is sent to the comparing unit 23 of the decoder 18. The secret identification number input unit 8 is disposed outside the financial transaction machine 17 for operation by the bearer of the magnetic card 12.

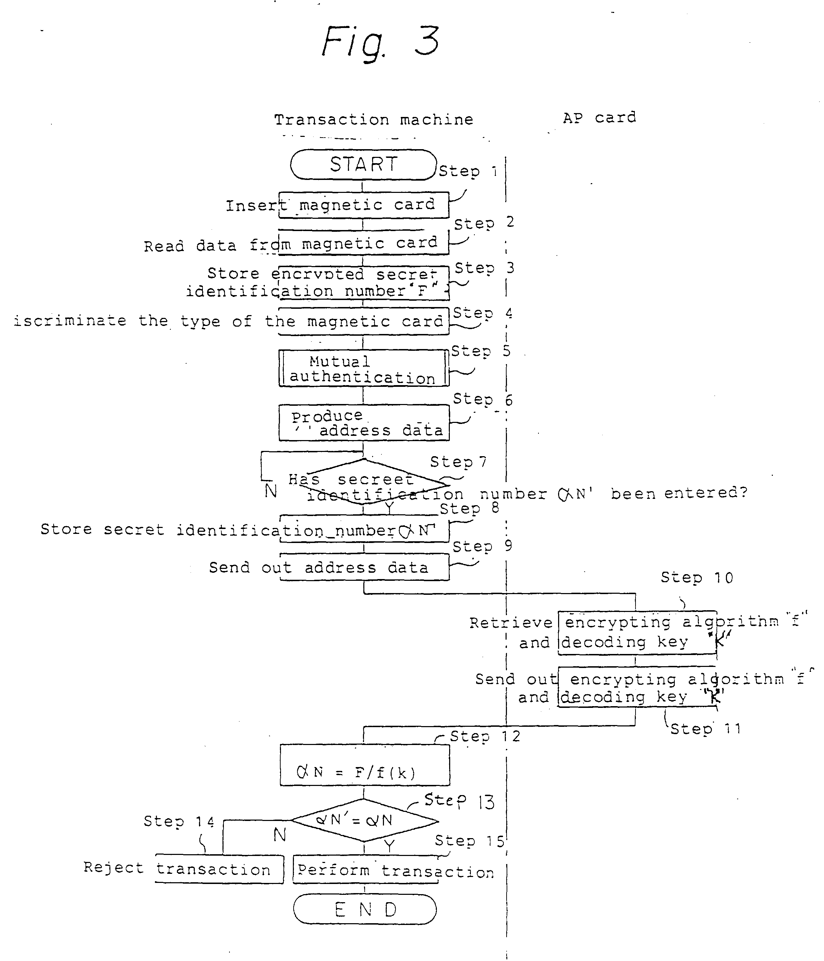

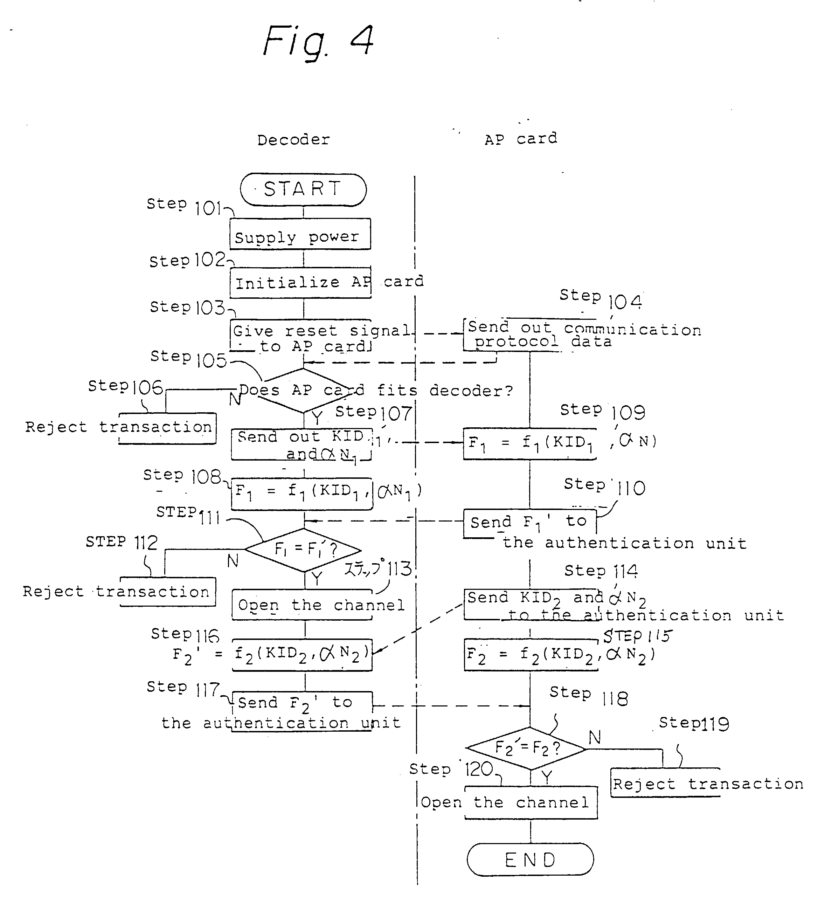

The operation of the secret identification number checking system thus constructed will be described hereinafter with reference to Fig. 3 showing a procedure to be executed by the secret identification number checking system and Fig. 4 showing a mutual authentication procedure.

Referring to Figs. 1 and 3, the bearer of the magnetic card 11 inserts the magnetic card 11 in a slot, not shown, formed in the transaction machine 17 in Step 1. Then, in Step 2, the card reader 4 reads the data written in the magnetic stripe 12 of the magnetic card 11 and including the cryptographic secret identification number F and the card discriminating data discriminating the type of the magnetic card 11. The card reader 4 converts the read data into corresponding electric signals and sends the electric signals to the decoding unit 22 of the decoder 18. The decoding unit 22 stores the cryptographic secret identification number F included in the received data in Step 3, and discriminates the type of the magnetic card 11 on the basis of the card discriminating data in Step 4. Other data are stored in the decoding unit 22. In Step 5, a mutual authentication procedure is executed. The mutual authentication procedure will be described with reference to Figs. 1 and 4.

The mutual authentication procedure is executed for the mutual authentication of the AP card 13 and the decoder 18; the AP card 13 confirms the rightfulness of the decoder 18 not to send data to decoders other than the rightful decoder 18, and the decoder 18 examines if the AP card 13 is rightful.

When inserted in the transaction machine 17, the AP card 13 is connected electrically to the communication unit 19 and power is supplied to the AP card 13 in Step 101 by a power supply, not shown, provided in the transaction machine 17 to initialize the AP card 13 in Step 102. Then, the decoding unit 22 sends a reset signal through the communication unit 19 to the AP card 13 in Step 103. In response to the reset signal, the authentication unit 16 of the AP card 13 sends out communication protocol data including attributes associated therewith in Step 104. Then, in Step 105, the authentication unit 21 of the decoder 18 makes a query to see if the AP card 13 fits the decoder 18. If the response in Step 105 is negative, the authentication unit 21 of the decoder sends a transaction rejection signal to the control unit, not shown, of the transaction machine 17 in Step 106. If the response in Step 105 is affirmative, the authentication unit 21 sends the key data KID₁ and the random numbers αN₁ read from the storage unit 20 for mutual authentication through the communication units 19 and 14 to authentication unit 16 of the AP card 13 in Step 107. At the same time, the authentication unit 21 operates the key data KID₁ and the random numbers αN₁ according to the algorithm f₁ read from the storage unit 20 in Step 108 to obtain the key data F₁. Meantime, the authentication unit 16 of the AP card 13 obtains key data F₁' in Step 109 by operating the mutual authentication data including the key data KID₁ and the random numbers αN₁ given thereto according to the same algorithm stored in the storage unit 15 as the algorithm f₁ stored in the decoder 18, and sends the key data F₁' through the communication units 14 and 19 to the authentication unit 21 of the decoder 18 in Step 110. Then, in Step 111, the authentication unit 21 decides if the two sets of key data F₁ and F₁' coincide with each other. If the AP card 13 is not rightful, the same algorithm as that stored in the decoder 18 is not stored in the storage unit 15 of the AP card 13, the key data F₁ cannot be obtained or a different key data is obtained, and hence the decision in Step 111 is negative. When the two sets of key data do not coincide with each other, the transaction is rejected in Step 112. When the two sets of key data coincide with each other, the decoder 18 decides that the AP card 13 is rightful and opens its channel to the AP card 13 in Step 113.

Then, the authentication unit 16 of the AP card 13 sends the mutual authentication data including the key data KID₂ and the random numbers αN₂ stored in the storage unit 15 to the authentication unit 21 of the decoder 18 in Step 114 and obtains a key data F₂ in Step 115 by operating the key data KID₂ and the random numbers αN₂ according to the algorithm f₂ stored in the storage unit 15. Meantime, the authentication unit 21 of the decoder obtains a key data F₂' in Step 116 by operating the mutual authentication data given thereto including the key data KID₂ and the random numbers αN₂ according to the same algorithm stored in the storage unit 20 of the decoder 18 as the algorithm f₂ stored in the storage unit 15 of the AP card 13, and sends the key data F₂' through the communication units 19 and 14 to the authentication unit 16 of the AP card 13 in Step 117. In step 118, the authentication unit 16 of the AP card 13 decides if the two sets of key data F₂ and F₂' coincide with each other. If the decoder 18 is not rightful, the same algorithm as the algorithm f₂ stored in the storage unit 15 of the AP card 13 is not stored in the decoder 18. Therefore no key data or a different key data is obtained and, consequently, the decision in Step 118 is negative. If the two sets of key data do not coincide with each other, the transaction is rejected in Step 119. If the two sets of key data coincide with each other, the AP card 13 decides that the decoder 18 is rightful and opens its channel to the decoder 18 in Step 120.

Thus, the mutual authentication is completed. The operation of the embodiment will further be described with reference to Figs. 1 and 3 again.

Referring to Fig. 3, in Step 6, the decoding unit 22 of the decoder 18 produces information specifying addresses of the decoding data, i.e., the decoding algorithm f and the decoding key k, relevant to the type of the magnetic card 11 identified in Step 4 in the storage unit 15 of the AP card 13. In Step 7, the controller, not shown, of the transaction machine 17 makes a query to see if a secret identification number αN' has been entered by operating the keyboard 8a of the secret identification number input unit. If the response in Step 7 is affirmative, the secret identification number αN' is stored in the comparing unit 23 in Step 8. Then, in Step 9, the decoding unit 22 sends the address data produced in Step 6 through the communication units 19 and 14 to the authentication unit 16 of the AP card 13. The authentication unit 16 of the AP card 13 retrieves the decoding algorithm f and the decoding key k from the storage unit 15 according to the address data in Step 10, and then the authentication unit 16 sends the decoding algorithm f and the decoding key k through the communication units 14 and 19 to the decoding unit 22 of the decoder 18 in Step 11. The decoding unit 22 decodes the cryptographic secret identification number F stored in Step 3 on the basis of the decoding algorithm f and the decoding key k to obtain a corresponding secret identification number αN in Step 12. The comparing unit 23 compares the secret identification number N' entered by the bearer and stored in Step 8 and the decoded secret identification numbers αN and decides if the secret identification numbers αN and αN' coincide with each other in Step 13. If the decision in Step 13 is negative, the transaction is rejected in Step 14, and if affirmative, the comparing unit 23 sends a signal to carry out the transaction to the control unit, not shown, of the transaction machine 18 in Step 15.

The object of the present invention can be achieved by using an encrypting device instead of the decoder. When an encrypting device is employed instead of the decoder, the secret identification number αN' entered by the bearer of the magnetic card is encrypted, and an encryption data as a decoding data for enabling to compare the encrypted secret identification number with the encrypted secret identification number F stored in the magnetic card is stored in the AP card. The encryption data consists of an encryption algorithm and an encryption key. The secret identification number N' entered by the bearer of the magnetic card is encrypted on the basis of the encryption data by the encrypting device into the encrypted secret identification number F'. The encrypted secret identification number F' and the encryptographic secret identification number F read by the card reader are compared. Naturally, the mutual authentication between the AP card and the encrypting device is executed also in this case.

It is also possible to store sets of decoding data respectively relating magnetic cards of different types respectively in AP cards, and to use a magnetic card in combination with an AP card storing a set of decoding data relevant to the same magnetic card. This combined use of a magnetic card and an AP card storing a set of decoding data relevant to the same magnetic card is effective to keep the decoding data secret from third persons including the operator of a magnetic card processing apparatus when the AP card and the magnetic card are issued by the same issuing agent.

### CAPABILITY OF EXPLOITATION IN INDUSTRY

As is apparent from the foregoing description, a secret identification number checking system in accordance with the present invention is effectively applicable to banking transactions using a cash dispenser and to transactions using an apparatus for dealing with credit cards. The secret identification number checking system is particularly suitable for transaction systems in which security is important.

## Claims

1. A secret identification number checking system for a transaction machine (17), for reading a first secret identification number stored in a magnetic card (11) in a cipher, and for collating the first secret identification number and a second secret identification number entered by means of a secret identification number input means, said secret identification number checking system comprising:
a card medium (13) capable of transferring data with the transaction machine and having a storage (15) storing decoding data to enable the collation of the first and second secret identification numbers, and mutual authentication data for deciding mutual rightfulness, and a first authentication unit (16) for deciding on the basis of the authentication data if the transaction machine is rightful;
a storage (20) for storing mutual authentication data, included in the transaction machine (17);
a second authentication unit (21) for deciding on the basis of the mutual authentication data if the card medium is rightful, included in the transaction machine;
decoding means (22) for decoding the first secret identification number or the second secret identification number on the basis of the decoding data to enable collation, included in the transaction machine;
and
collating means (23) for collating the first and second secret identification numbers, included in the transaction machine;
wherein said first (16) and second (21) authentication units authenticate mutually on the basis of data stored in the card medium (13) and the transaction machine (17), and the storage (15) of said card medium (13) transfers the decoding data to said decoding means (22) when both the first (16) and second (21) authentication units are rightful.

2. A secret identification number checking system according to Claim 1, wherein the storage (15) of said card medium (13) stores a plurality of sets of decoding data respectively for a plurality of magnetic cards (11) of different types.

3. A secret identification number checking system according to Claim 1, wherein said decoding means (22) decodes the first secret identification number on the basis of the decoding data.

4. A secret identification number checking system according to Claim 1, wherein the decoding data consists fo a decoding algorithm and a decoding key.

5. A secret identification number checking system according to Claim 1, wherein the storage (15) of said card medium (13) stores encryption data as a decoding data and the second secret identification number is encrypted on the basis of the encryption data so that said collating means (23) collates the encrypted second secret identification number and the first secret identification number.

6. A secret identification number checking system according to Claim 1, wherein the magnetic card also stores information discriminating the type of the magnetic card.

7. A secret identification number checking system according to Claim 1, wherein said mutual authentication is performed by operating an algorithm stored in the card medium (13) on key data and random numbers stored in said transaction machine (17) as well as on key data and random numbers stored in said card medium (13) and by operating an algorithm stored in said transaction machine (17) on key data and random numbers stored in said card medium (13) as well as on key data and random numbers stored in said transaction machine (17) for mutually verifying the result.

## Patentansprüche

1. Geheimidentifikationsnummer-Prüfsystem für eine Transaktionsmaschine (17) zum Lesen einer ersten geheimen Identifikationsnummer, die auf einer Magnetkarte (11) in einem Schlüssel gespeichert ist, und zum Vergleichen der ersten geheimen Identifikationsnummer mit einer zweiten geheimen Identifikationsnummer, die mittels einer Geheimidentifikationsnummer-Eingabeeinrichtung eingegeben wurde, wobei das Geheimidentifikationsnummer-Prüfsystem folgendes aufweist:
ein Kartenmedium (13), das in der Lage ist, Daten zur Transaktionsmaschine zu übertragen, das einen Speicher (15), der Decodierdaten speichert, um den Vergleich der ersten mit der zweiten geheimen Identifikationsnummer zu ermöglichen, und der gegenseitige Authentifizierungsdaten zur Entscheidung über die gegenseitige Rechtmäßigkeit speichert, und eine erste Authentifizierungseinheit (16) aufweist, um auf der Basis der Authentifizierungsdaten zu entscheiden, ob die Transaktionsmaschine rechtmäßig ist;
einen in der Transaktionsmaschine (17) enthaltenen Speicher (20) zum Speichern gegenseitiger Authentifizierungsdaten;
eine zweite, in der Transaktionsmaschine enthaltene Authentifizierungseinheit (21), um auf der Basis der gegenseitigen Authentifizierungsdaten zu entscheiden, ob das Kartenmedium rechtmäßig ist;
eine in der Transaktionsmaschine enthaltene Decodiereinrichtung (22) zum Decodieren der ersten geheimen Identifizierungsnummer oder der zweiten geheimen Identifizierungsnummer auf der Basis der Decodierdaten, um den Vergleich zu ermöglichen; und
eine in der Transaktionsmaschine enthaltene Vergleichseinrichtung (23) zum Vergleichen der ersten mit der zweiten geheimen Identifikationsnummer;
wobei die erste (16) und die zweite (21) Authentifizierungseinheit gegenseitig auf der Basis der auf dem Kartenmedium (13) und in der Transaktionsmaschine (17) gespeicherten Daten authentifizieren, und wobei der Speicher (15) des Kartenmediums (13) die Decodierdaten zur Decodiereinrichtung (22) überträgt, wenn sowohl die erste (16) als auch die zweite (21) Authentifizierungseinheit rechtmäßig ist.

2. Geheimidentifikationsnummer-Prüfsystem nach Anspruch 1, bei dem der Speicher (15) des Kartenmediums (13) jeweils für eine Vielzahl unterschiedlicher Typen von Magnetkarten (11) eine Vielzahl von Sätzen von Decodierdaten speichert.

3. Geheimidentifikationsnummer-Prüfsystem nach Anspruch 1, bei dem die Decodiereinrichtung (22) die erste geheime Identifikationsnummer auf der Basis der Decodierdaten decodiert.

4. Geheimidentifikationsnummer-Prüfsystem nach Anspruch 1, bei dem die Decodierdaten aus einem Decodieralgorithmus und einem Decodierschlüssel bestehen.

5. Geheimidentifikationsnummer-Prüfsystem nach Anspruch 1, bei dem der Speicher (15) des Kartenmediums (13) Verschlüsselungsdaten als Decodierdaten speichert und die zweite geheime Idenfikationsnummer auf der Basis der Verschlüsselungsdaten verschlüsselt wird, so daß die Vergleichseinrichtung (23) die verschlüsselte zweite geheime Identifikationsnummer mit der ersten geheimen Identifikationsnummer vergleicht.

6. Geheimidentifikationsnummer-Prüfsystem nach Anspruch 1, bei dem die Magnetkarte auch den Magnetkartentyp kennzeichnende Informationen speichert.

7. Geheimidentifikationsnummer-Prüfsystem nach Anspruch 1, bei dem die gegenseitige Authentifizierung durchgeführt wird, indem zur gegenseitigen Verifizierung des Ergebnisses ein auf dem Kartenmedium (13) gespeicherter Algorithmus über in der Transaktionsmaschine (17) gespeicherte Schlüsseldaten und Zufallszahlen sowie über auf dem Kartenmedium (13) gespeicherte Schlüsseldaten und Zufallszahlen läuft, und indem ein in der Transaktionsmaschine (17) gespeicherter Algorithmus über auf dem Kartenmedium (13) gespeicherte Schlüsseldaten und Zufallszahlen sowie über in der Transaktionsmaschine (17) gespeicherte Schlüsseldaten und Zufallszahlen läuft.

## Revendications

1. Système de vérification de numéro d'identification secret pour une machine à opérations financières (17), pour lire un premier numéro d'identification secret emmagasiné dans une carte magnétique (11), sous forme chiffrée, et pour confronter le premier numéro d'identification secret et un second numéro d'identification secret entré grâce à un moyen d'entrée de nombre d'identification secret, ledit système de vérification de numéro d'identification secret comprenant:
un support d'information sur carte (13) capable de transférer des données avec la machine à opérations financières et ayant une mémoire (15) emmagasinant des données de décodage pour permettre la confrontation du premier et du second numéros d'identification secrets, et des données d'authentification réciproque pour déterminer la conformité réciproque, et une première unité d'authentification (16) pour déterminer, sur la base des données d'authentification si la machine à opérations financières est conforme;
une mémoire (20) pour emmagasiner des données d'authentification réciproque, inclue dans la machine à opérations financières (17);
une seconde unité d'authentification (21) pour déterminer, sur la base de l'authentification réciproque si le support d'information sur carte est conforme, inclue dans la machine à opérations financières (17);
un moyen de décodage (22) pour décoder le premier numéro d'identification secret ou le second numéro d'identification secret sur la base des données de décodage pour permettre la confrontation, inclus dans la machine à opérations financières; et
un moyen de confrontation (23) pour confronter le premier et le second numéros d'identification secrets, inclus dans la machine à opérations financières;
dans lequel ladite première (16) et ladite seconde (21) unités d'authentification authentifient réciproquement sur la base de données emmagasinées dans le support d'information sur carte (13) et la machine à opérations financières (17), et la mémoire (15) dudit support d'information sur carte (13) transfère les données de décodage audit moyen de décodage (22) lorsque tant la première (16) que la seconde (21) unités d'authentification sont conformes.

2. Système de vérification de numéro d'identification secret selon la revendication 1, dans laquelle la mémoire (15) dudit support d'information sur carte (13) emmagasine une pluralité d'ensembles de données de décodage pour une pluralité de cartes magnétiques (11) de types différents, respectivement.

3. Système de vérification de numéro d'identification secret selon la revendication 1, dans lequel ledit moyen de décodage (22) décode le premier numéro d'identification secret sur la base des données de décodage.

4. Système de vérification de numéro d'identification secret selon la revendication 1, dans lequel lesdites données de décodage consistent en un algorithme de décodage et une clé de décodage.

5. Système de vérification de numéro d'identification secret selon la revendication 1, dans lequel la mémoire (15) dudit support d'information sur carte (13) emmagasine des données de chiffrement comme données de décodage et le second numéro d'identification secret est chiffré sur la base des données de chiffrement de sorte que lesdits moyens de confrontation (23) confrontent le numéro d'identification secret chiffré et le premier numéro d'identification secret.

6. Système de vérification de numéro d'identification secret selon la revendication 1, dans lequel la carte magnétique emmagasine également des informations distinguant le type de carte magnétique.

7. Système de vérification de numéro d'identification secret selon la revendication 1, dans lequel ladite authentification réciproque est réalisée en appliquant un algorithme emmagasiné dans le support d'information sur carte (13) à des données de clé et des nombres aléatoires emmagasinés dans ladite machine à opérations financières (17) ainsi qu'à des données de clé et des nombres aléatoires emmagasinés dans ledit support d'information sur carte (13) et en appliquant un algorithme emmagasiné dans ladite machine à opérations financières (17) à des données de clé et des nombres aléatoires emmagasinés dans ledit support d'information sur carte (13) ainsi qu'à des données de clé et des nombres aléatoires emmagasinés dans ladite machine à opérations financières (17) pour vérification réciproque du résultat.
